# EUROPEAN PATENT APPLICATION

(11) **EP 0 693 517 A1**
(43) Date of publication of application: **24.01.1996**
(21) Application number: 95111455.2
(22) Date of filing: 20.07.1995
(51) Int. Cl.: C08G 73/10, C08G 77/42, C08L 79/08, C08K 3/36, C08K 5/54, C09J 179/08, C09D 179/08, C08K 13/02

(54) **Curable silicone-modified polyimide compositions**

(30) Priority: 21.07.1994 JP 191074/94
(71) Applicant: Dow Corning Toray Silicone Company, Limited, Tokyo 103 (JP)
(72) Inventor: Nakashima, Hisataka, Dow Corning Toray Sil.Co.Ltd., Nihonbashi-Muromachi, Chuo-ku, Tokyo 103 (JP); Yamakawa, Kimio, Dow Corning Toray Sil. Co., Ltd., Nihonbashi-Muromachi, Chuo-ku, Tokyo 103 (JP)
(74) Representative: Spott, Gottfried, Dr.

(57) **Abstract**

The present invention is a curable, film-forming, silicone-modified polyimide composition that is storage-stable, and produces heat-resistant, highly conformal, and strongly adhesive resin films or coatings which further exhibit low coefficients of thermal expansion (low-CTE). These compositions comprise: (A) a silicone-modified polyimide solution obtained by the reaction in organic solvent of (a) a tetracarboxylic dianhydride and (b) an amino-functional organosilicon compound; (B) an alcohol; (C) an inorganic filler and, optionally, (D) an organoalkoxysilane. Because the compositions of the instant invention comprise components (A) - (C) or (A) - (D), they have excellent storage stabilities and the ability to cure into low-CTE silicone-modified polyimide resin films.

## Description

This invention relates to storage-stable silicone-modified polyamide solution compositions that cure to give heat-resistant, highly conformal, and strongly adhesive silicone-modified polyimide resin films and coatings.

As is well known, polyimide resins exhibit, excellant mechanical strength, heat resistance, chemical resistance, and electrical insulation. They are currently used as heat-resistant films, adhesives, coatings, molding resins, and resins for covering or insulating applications. The modifications of polyimide resins with silicone equips these resins with such properties as gas permeability, lower cure temperatures, and shorter cure times.

We have previously disclosed silicone-modified polyimide resins that bond well to a variety of substrates and a method for their preparation in JPA 5-32778.

However, our prior resins yield coatings with high coefficients of thermal expansion (CTE) and accordingly are precluded from some applications. The present invention is directed at lowering the CTE of silicone-modified polyimide resins.

The present invention takes as its abject the introduction of silicone-modified polyamide solution compositions that are very storage-stable polyamide solutions and that cure into low-CTE silicone-modified polyimide resin films or coatings.

The present invention introduces a curable silicone-modified polyamide solution composition comprising:
(A) a reaction product prepared by the reaction of a total of 100 weight parts of
   (a) a tetracarboxylic dianhydride
      and
   (b) an amino-functional organosilicon compound with the general formula: 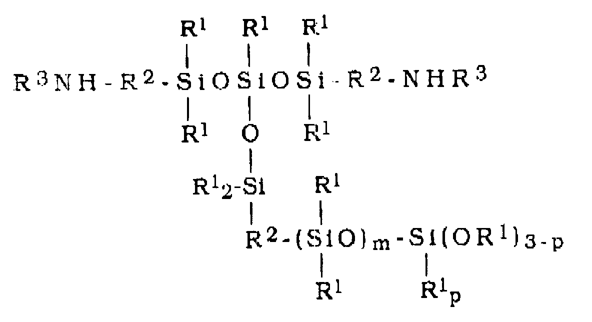 wherein R¹ denotes aliphatic unsaturation-free monovalent hydrocarbon groups which may be the same or may differ; R² denotes aliphatic unsaturation-free divalent hydrocarbon groups which may be the same or may differ; R³ is hydrogen atom or a hydrocarbyl-substituted silicon atom; m is an integer from 0 to 100; and p is 0 or 1, said reaction being carried out in
   (c) 25 to 9,900 weight parts of an organic solvent; said components (a) and (b) being present in a molar ratio of 1:0.5 to 1:1.5, respectively;
(B) 0.1 to 5 weight parts of alcohol;
   and
(C) 1 to 3,000 weight parts of inorganic filler.

The curable silicone-modified polyamide solution, optionally includes 0.1 to 10 weight parts of an organoalkoxysilane, based of the total weight of said composition.

Component (A) of the present invention is a silicone-modified polyamide solution prepared by the reaction of (a) a tetracarboxylic dianhydride and (b) an amino-functional organosilicon compound with the general formula: 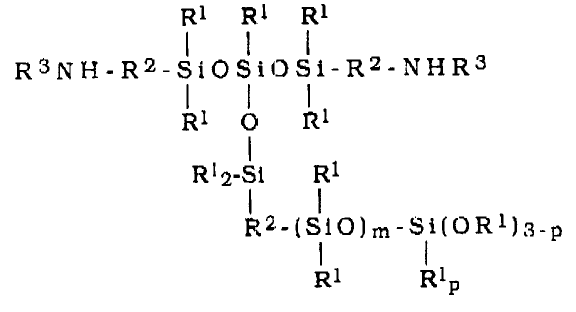
wherein R¹ denotes aliphatic unsaturation-free monovalent hydrocarbon groups which may be the same or may differ; R² denotes aliphatic unsaturation-free divalent hydrocarbon groups which may be the same or may differ; R³ is hydrogen atom or a hydrocarbyl-substituted silicon atom; m is an integer from 0 to 100; and p is 0 or 1, in (c) organic solvent.

The tetracarboxylic dianhydride, the (a) portion of component (A), comprises those tetracarboxylic dianhydrides known as starting materials for polyimide resins. Component (a) is exemplified by aromatic tetracarboxylic dianhydrides, such as pyromellitic dianhydride, benzophenonetetracarboxylic dianhydride, and biphenyltetracarboxylic dianhydride; alicyclic tetracarboxylic dianhydrides, such as cyclobutanetetracarboxylic dianhydride, cyclopentanetetracarboxylic dianhydride, and cyclohexanetetracarboxylic dianhydride; or aliphatic tetracarboxylic dianhydrides, such as butanetetracarboxylic dianhydride.

R¹ for the amino-functional organosilicon compound (b) denotes monovalent hydrocarbon groups that are free of aliphatic unsaturation, and the various R¹ groups may be the same or different. R¹ is exemplified by alkyl groups, such as methyl, ethyl and propyl; aryl groups such as phenyl, tolyl and xylyl; and substituted alkyl groups such as chloromethyl or perfluoromethyl. R² in (b) denotes divalent hydrocarbon groups that are also free of aliphatic unsaturation, and the various R² groups may be the same or different. R² is exemplified by alkylene groups, such as methylene, ethylene, propylene and butylene; or by arylene groups, such as phenylene, tolylene and xylylene. R³ in (b) is hydrogen atom or a hydrocarbyl-substituted silicon atom. When R³ is hydrocarbyl-substituted silicon, it is exemplified by trimethylsilyl, triethylsilyl, tert-butyldimethylsilyl anal phenyldimethylsilyl. The subscript m is an integer ranging from 0 to 100, and the subscript p has a value of 0 or 1.

An amino-functional organosilicon compounds may be synthesized by various methods, and the methods described in JPA(s) 5-32677 and 5-51462 are given as suitable examples for synthesis.

The amino-functional organosilicon compound (b) is used in a quantity that affords a molar ratio of component (a) to component (b) of from 1:0.5 to 1:1.5.

The reaction of components (a) and (b) in organic solvent yields the component (A) of the instant invention. Specific examples of the organic solvent are N,N-dimethylformamide, N,N-dimethylacetamide, N-methyl-2-pyrrolidinone, N-methylcaprolactam, dimethyl sulfoxide, tetramethylurea and butyrolactone. These organic solvents may be used individually or in mixtures. The organic solvent is used at 25 to 9,900 weights parts for each 100 weight parts of the combined quantity of components (a) and (b). At less than 25 weight parts, gelatin becomes a risk due to the high starting material concentration, i.e., the high concentration of components (a) and (b). At more than 9,900 weight parts, the low starting material concentration prevents the formation of a coating that bonds well to its substrate when the polyimide resin film is cured. Silicone-modified polyamide solutions corresponding to starting material concentrations of 1 to 80 weight% are preferred for the present invention.

The alcohol used as component (B) in this invention functions to improve the storage stability of our composition. Its type and other qualities are not crucial as long as this function is fulfilled. Examples are monohydric alcohols, such as methanol, ethanol, n-propanol and isopropanol. The use of alcohols that have been preliminarily purified by distillation is also recommended. The alcohol is added at 0.1 to 5 weight parts for each 100 weight parts of the combined quantity of components (a) and (b). The storage stability of our composition is reduced when the alcohol is added at less than 0.1 weight part. The addition of more than 5 weight parts alcohol causes scission of the main chain amide bonds. This in turn produces a decline in the viscosity of the silicone-modified polyamide solution composition, and thus a decline in the strength of the polyimide resin product afforded by our composition.

The inorganic filler used as component (C) in the present invention functions to reduce the CTE of the ultimately formed polyimide resin. Specific examples of this filler include microparticulate silicas, such as fumed silica or wet-process silica; hydrophobic silicas having a hydrophobicizing treatment of the surface of the above microparticulate silicas; organically-modified silicas achieved by treating the surface of the above silicas with organosilane; and alumina powder. The organically-modified silicas are preferred. These are specifically exemplified by microparticulate silica whose surface has been treated with hexamethyldisilazane, gamma-aminopropyltrimethoxysilane, vinyltrimethoxysilane, and gamma-glycidoxypropyltrimethoxysilane. The inorganic filler is added at 1 to 3,000 weight parts far each 100 weight parts of the combined quantity of components (a) and (b). When more than 3,000 weight parts of filler are added, the inorganic filler prevents the formation of a strongly adherent polyimide resin coating caused by masking of the alkoxysilyl groups in the silicone-modified polyamide solution. The addition of less than 1 weight part of inorganic filler will not adequately restrain the fluidity of our silicone-modified polyamide solution composition, and also produces no reduction in the CTE of the polyimide resin film produced by curing.

Our composition comprises the above-described components (A), (B), and (C), but the optional addition of organoalkoxysilane, as a component (D), is preferred for further enhancing the storage stability of said composition. Suitable organoalkoxysilanes (D) are methyltrimethoxysilane, methyldimethoxysilane, dimethyldimethoxysilane, vinyltrimethoxysilane, aminopropyltrimethoxysilane and phenyltrimethoxysilane. This organoalkoxysilane functions to prevent are increase in composition viscosity that results from the reaction of the alkoxy groups in component (A) with residual hydzoxyl groups which are present on the surface of component (C). Subject organoalkoxysilane should be added at 0.1 to 10 weight parts, based on the total weight of said composition.

The silicone-modified polyamide solution composition of our invention is prepared simply by mixing components (A), (B), and (C); or (A), (B), (C), and (D) to homogeneity, wherein the homogeneous admixture of component (C) in particular is advantageously carried out using a three-roll mill, ball mill, or the like.

The resulting composition has an excellent storage stability and cures to form low-CTE polyimide resin films and coatings. As a result this invention is useful as a protective insulating coating for semiconductor elements, such as integrated circuits and diodes.

The invention will be explained in greater detail below through working examples, in which the viscosity is the value measured at 25°C and "%" denotes "weight%".

### Example 1

The following were introduced under a nitrogen flow into a four-neck flask equipped with stirrer, addition funnel, and thermometer and were stirred: 14.7 g of pyromellitic dianhydride and 50.5 g of N,N-dimethylacetamide. This was followed by the dropwise addition over 13 minutes of a mixture of 1.1 g of anhydrous ethanol and 35.8 g of diamine compound with the following formula (starting material concentration = 50%) : 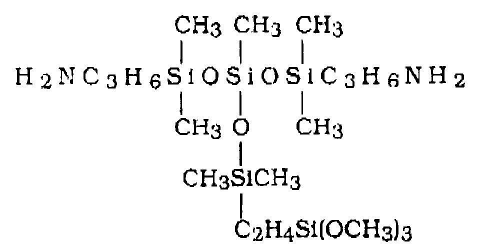
During this period the reaction temperature rose from 25°C to 47°C. After addition completion, the reaction was stirred for 5.7 hours in the range from 47°C to 30°C. Filtration of the reaction mixture across a filter then yielded 99.5 g of a silicone-modified polyamide solution.

A silicone-modified polyamide solution composition of the instant invention was prepared by mixing 42.3 g of silica micropowder (85% weight proportion based on the starting materials for the silicone-modified polyamide solution) into the 99.5 g silicone-modified polyamide solution prepared as above. This silica had an average particle size of 5 micrometers, and its surface had been preliminarily treated with vinyltimethoxysilane. The initial viscosity of this silicone-modified polyamide solution composition was 3,000 centipoise (mPa.s). The composition was then stored at 5°C for 2 months and its viscosity was again measured. No change in viscosity was detected. When this silicone-modified polyamide solution composition was subsequently coated on a glass substrate and heated at 150°C for 3 hours, a polyimide resin coating was formed that adhered strongly to the substrate. An excellent film-forming behavior was observed at this point. To measure the CTE, this composition was also applied to a Teflon™ sheet and heated for 3 hours at 150°C, and the polyimide resin film produced was peeled from the Teflon™ to provide a measurement specimen. The results of this measurements are reported in Table 1.

The CTE was measured by dilatometry, which is a well known method for measuring the CTE of solids. In brief, the sample and mercury are placed in a glass cell connected to a capillary tube, and this assembly is then heated. The mercury level rises as the temperature increases, and the sample's coefficient of volumetric expansion can be determined by measuring the magnitude of this rise.

### Comparative Example 1

The following were introduced under a nitrogen flow into a four-neck flask equipped with stirrer, additional funnel, and thermometer and were stirred: 14.2 g of pyromellitic dianhydride and 48.8 g of N,N-dimethylacetamide. This was followed by the dropwise addition over 15 minutes of a mixture of 0.98 g of anhydrous ethanol and 34.6 g of diamine compound of Example 1.

During this period, the reaction temperature rose from 26°C to 48°C. After addition completion, the reaction was stirred for 5.1 hours in the range from 48°C to 27°C. Filtration of the reaction mixture across a filter then yielded 95.1 g of a silicone-modified polyamide solution. A polyimide resin film was obtained by coating polyamide solution on a glass substrate and heating at 150°C for 3 hours. The CTE of this film was also measured as in Example 1, and the results are reported in Table 1.

### Example 2

The following were introduced under a nitrogen flow into a four-neck flask equipped with stirrer, addition funnel, and thermometer, and were stirred: 15.2 g of pyromellitic dianhydride and 55.1 g of N,N-dimethylacetamide. This was followed by the dropwise addition over 15 minutes of a mixture of 0.55 g od anhydrous ethanol and 39.9 g of diamine compound of the following formula (starting material concentration = 50%) : 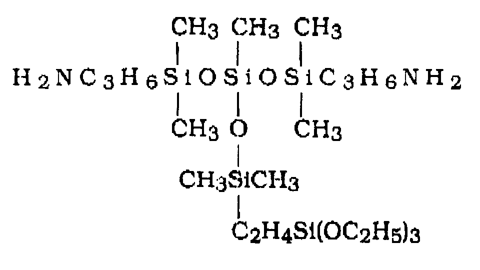
During this period, the reaction temperature rose from 26°C to 45°C. After addition completion, the reaction was stirred for 5 hours in the range from 45°C to 29°C. Filtration of the reaction mixture across a filter then yielded 108.5 g of a silicone-modified polyamide solution.

A silicone-modified polyamide solution composition of this invention was prepared by mixing 46.1 g of silica micropowder (85% weight proportion based on the starting materials for the silicone-modified polyamide solution) into the 108.5 g silicone-modified polyamide solution prepared as above. This silica had an average particle size of 5 micrometers, and its surface had been preliminarily treated with vinyltrimethoxysilane. A polyimide resin film was obtained by coating this composition on a glass substrate and heating at 150°C for 3 hours. The CTE of this film was measured as in Example 1, and the result is reported in Table 1.

### Example 3

The following were introduced under a nitrogen flow into a four-neck flask equipped with stirrer, additional funnel, and thermometer, and were stirred: 18.2 g of benzophenonetetracarboxylic dianhydride and 48.2 g of N,N-dimethylacetamide. This was followed by the dropwise addition over 13 minutes of a mixture of 0.72 g of anhydrous ethanol and 30.0 g of the diamine compound of Example 1. During this period, the reaction temperature rose from 25°C to 45°C. After addition completion, the reaction was stirred for 4.7 hours in the range from 45°C to 30°C. Filtration of the reaction mixture across a filter then yielded 92.3 g of a silicone-modified polyamide solution.

A silicone-modified polyamide solution composition of our invention was prepared by mixing 1.4 g of vinyltrimethoxysilane and 40.2 g of silica micropowder (87% weight proportion based on the starting materials for the silicone-modified polyamide solution) into the 92.3 g of silicone-modified polyamide solution prepared as above. This silica had an average particle size of 5 micrometers. A polyimide resin film was obtained by coating this composition on a glaze substrate and heating at 150°C for 3 hours. The CTE of this film was measured as in Example 1, and the results are reported in Table 1.

### Example 4

The following were introduced under a nitrogen flow into a four-neck flask equipped with stirrer, addition funnel, and thermometer, and were stirred: 20.2 g of benzophenonetetracarboxylic dianhydride and 65.1 g N,N-dimethylacetamide. This was followed by the dropwise addition over 18 minutes of a mixture of 0.65 g of anhydrous ethanol and 44.9 g of diamine compound with the following formula (starting material concentration = 50%): 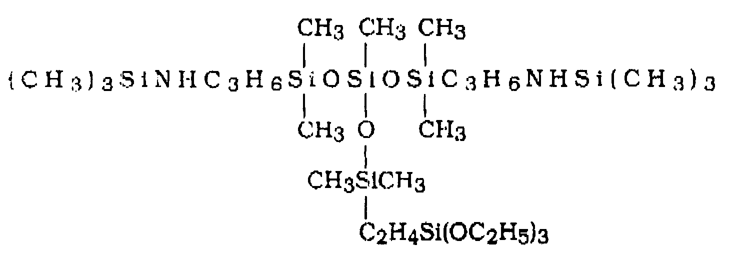
During this period, the reaction temperature rose from 26°C to 48°C. After addition completion, the reaction was stirred for 6.1 hours in the range from 48°C to 31°C. Filtration of the reaction mixture across a filter then yielded 127.2 g of a silicone-modified polyamide solution.

A silicone-modified polyamide solution composition of the instant invention was prepared by mixing 56.0 g of silica micropowder (86% weight proportion based on the starting materials for the silicone-modified polyamide solution) into the 127.2 g of silicone-modified polyamide solution prepared as above. This silica had an average particle size of 5 micrometers, and its surface had been preliminarily treated with vinyltrimethoxysilane.

A polyimide resin film was obtained by coating this composition on a glass substrate and heating at, 150°C for 3 hours. The CTE of this film was measured as in Example 1, and the results are reported in Table 1.

**Table 1**

| | coefficient of thermal expansion/°C⁻¹ |
|---|---|
| Example 1 | 2.0 x 10⁻⁵ |
| Example 2 | 2.1 x 10⁻⁵ |
| Example 3 | 1.8 x 10⁻⁵ |
| Example 4 | 1.9 x 10⁻⁵ |
| Comparative Example 1 | 2.0 x 10⁻⁴ |

Because the silicone-modified polyamide solution compositions of our invention comprise components (A) - (C), or (A) - (D), they have excellent storage stabilities and the ability to cure into low-CTE silicone-modified polyimide resin films.

## Claims

1. A curable silicone-modified polyamide solution composition comprising:
(A) a reaction product prepared by the reaction of a total of 100 weight parts of
(a) a tetracarboxylic dianhydride
and
(b) an amino-functional organosilicon compound with the general formula: 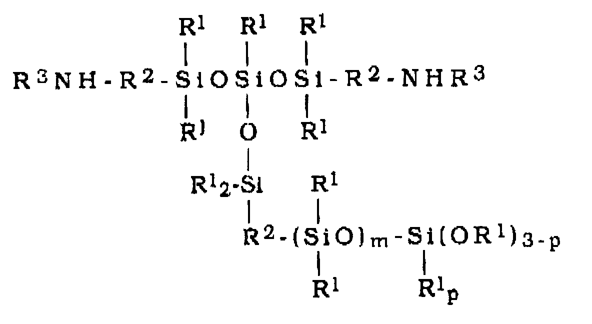 wherein R¹ denotes aliphatic unsaturation-free monovalent hydrocarbon groups which may be the same or may differ; R² denotes aliphatic unsaturation-free divalent hydrocarbon groups which may be the same or may differ; R³ is hydrogen atom or a hydrocarbyl-substituted silicon atom; m is an integer from 0 to 100; and p is 0 or 1,
said reaction being carried out in
(c) 25 to 9,900 weight parts of an organic solvent; said components (a) and (b) being present in a molar ratio of 1:0.5 to 1:1.5, respectively;
(B) 0.1 to 5 weight parts of alcohol;
and
(C) 1 to 3,000 weight parts of inorganic filler.

2. A composition in accordance with Claim 1 further comprising (D) 0.1 to 10 weight parts of an organoalkoxysilane.

3. A composition in accordance with Claim 1 wherein said component (A) is between 1 and 80 weight percent of the sum of the weights of components (A), (B) and (C).

4. A composition in accordance with Claim 1 wherein said component (C), the inorganic filler, is silica.

5. A composition in accordance with Claim 4 wherein said silica has been treated with an organoalkoxysilane.

6. A strongly adhesive silicone modified polymide resin obtainable by curing the composition of Claim 1.

7. An article of manufacture comprising a substrate, said substrate presenting at least one surface thereon, said surface having the cured coating formed thereon of Claim 6.
